(19) Europäisches Patentamt
European Patent Office
Office européen des brevets

(11) Publication number: **0 054 544**
**B1**

(12) **EUROPEAN PATENT SPECIFICATION**

(45) Date of publication of patent specification: **09.01.85**

(51) Int. Cl.[4]: **C 07 C 101/12**, C 07 C 99/12, C 13 J 1/06, B 01 D 15/08

(21) Application number: **81900580.2**

(22) Date of filing: **26.02.81**

(86) International application number: **PCT/FI81/00014**

(87) International publication number: **WO 81/02420 03.09.81 Gazette 81/21**

(54) **BETAINE RECOVERY PROCESS.**

(30) Priority: **29.02.80 US 125991**

(43) Date of publication of application: **30.06.82 Bulletin 82/26**

(45) Publication of the grant of the patent: **09.01.85 Bulletin 85/02**

(84) Designated Contracting States: **AT CH DE FR GB LI LU NL SE**

(56) References cited:
**DE-B-1 136 711**
**GB-A-1 448 524**
**SE-A-76 042 449**
**SE-C- 157 330**
**US-A-2 375 165**
**US-A-2 586 295**
**US-A-2 937 959**
**US-A-3 214 293**
**Chemical Abstracts Vol. 85 (1976), abstract No. 145149v, JP7639625**
**Chemical Abstracts Vol. 84 (1976), abstract No. 46423e, Sucr Belge Sugar Ind Abstr. 1975, 94(9), 333-43 (Fr)**

(73) Proprietor: **SUOMEN SOKERI OY**
**Länsituulentie 7**
**SF-02100 Espoo 10 (FI)**

(72) Inventor: **HEIKKILÄ, Heikki Olavi**
**Ristikalliontie 19**
**SF-02460 Kantvik (FI)**
Inventor: **MELAJA, Jaakko Asko**
**Niittypolku 6 c**
**SF-02460 Kantvik (FI)**
Inventor: **MILLNER, Dan Ernst David**
**Itäportti 1C 19**
**SF-02210 Espoo 21 (FI)**
Inventor: **VIRTANEN, Jouko Johannes**
**Brontie 2 as 4**
**SF-02400 Kirkkonummi (FI)**

(74) Representative: **von Kreisler, Alek, Dipl.-Chem. et al**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 054 544 B1**

## Description

The present invention relates to a process for recovering betaine from molasses.

Betaine is an important component of beet molasses and has the molecular formula of

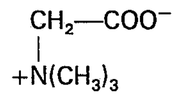

or

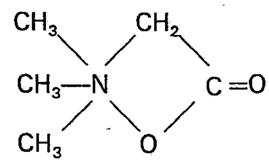

The compound is amphoteric and shows a neutral reaction in water solution. Betaine is readily soluble in water, and is utilized in animal feeds, including feeds for cattle, pigs and birds. In addition, betaine has pharmaceutical application.

Betaine occurs in roots, grains, and stems of a variety of plants, and the sugar beet has a relatively high content thereof, ranging from 1,0 to 1,5% on a dry solids basis. During processing of the sugar beet to recover sucrose, betaine concentrates in the molasses. Beet molasses normally contains between 3 and 8 percent on a dry solids basis of betaine. Other materials having substantial amounts of betaine include rest molasses from the Steffen process, vinasse, and some run off syrups that are the by-products of sugar refining.

From beet molasses, betaine has been recovered by ion exchange, by crystallization as hydrochloride, or by extraction into organic solvents.

Several modifications of the ion exchange process have been published; see, for example, U.S. Patent No. 2,586,295, Japanese Patent No. 24904/71, U.S.S.R. Patent No. 445,270, and Schneider F.: Technologie des Zuckers, Verlag Schaper Hannover, 1968, p. 635—636. These prior art methods generally comprise passing molasses through a strong cation exchanger, rinsing the exchanger free from residual solution, and desorbing the betaine by passing a diluted ammonia solution through the resin bed.

From U.S. 2375165 a modification is known of the classic method to separate amino acids by ion exchange treatment on a resin in $H^+$-form. The resin must be regenerated by acid after use.

If beet molasses is subjected to a desugarization process, i.e. the Steffen process, the betaine concentration into the rest molasses. A similar raw material for betaine is vinasse, which is residual molasses from a fermentation process.

Betaine has been recovered from rest molasses or vinasse by ion exchange, but due to the comparatively high concentration of betaine in these materials, it is also possible to utilize the low solubility of betaine hydrochloric acid; see British Patent No. 715 774, U.S. Patent No. 2 519 573, Schneider F.: Technologie des Zuckers, Verlag Schaper, Hannover, 1968, p. 1010.

From rest molasses, betaine has also been recovered by extraction into organic solvents; see German Patent Appln. No. 2,300,492.

Chromatographic methods for the separation of organic compounds are well-known from analytical chemistry. A type of chromatography, the so-called "ion exclusion" chromatography, has been used for the recovery of sucrose from molasses. A great number of patents and other publications on this method can be found in the literature, i.e. D. Gross in CITS 14th Gen. Ass. Brussels 1971, U.S. Patents Nos. 2 868 677; 2 937 959; 3 214 293; and 3 884 714; and Canadian Patent No. 754 511. In the ion exclusion process, molasses is usually separated on a cation exchange resin column in alkali metal form. The sugar fraction is eluted from the column after the non-sugar fraction.

From U.S. 3 214 293 a method is known for the separation of the non-sugars from sugars of a cane sugar solution. Cane sugar molasse does not contain betaine and accordingly no betaine is recovered. The elution order is non-sugar—sugars.

From G.B. 1 448 524 a method is known for the separation of sugars from non-sugars of molasses on at least 2 resin columns in $Ca^{++}$-form. Betaine is not recovered. There should be a reversed elution order compared to resins in alkaline-form (page 1, lines 23—30 and page 3, lines 50—64). The resin has to be regenerated to $Ca^{++}$-form after use.

It has now been found that betaine can be separated from the sugars and non-sugars of beet molasses by a chromatographic process. Dilute molasses is supplied to a chromatographic column. On elution of the dilute molasses from the column with water, there is recovered, as eluate leaving the bottom of the column, a first, nonsugar waste fraction, a second fraction containing a substantial proportion of the sugars in the feed, and a third betaine fraction, which is eluted at the tail end after the sugar fraction, and which contains a high proportion of the betaine in the feed, as much as 80% or more on dry substance. From the said betaine fraction, betaine can be recovered by crystallization, or may be recovered as the hydrochloride, if desired.

The present invention is based on the above finding. According to this invention there is provided a process for recovering betaine from molasses which comprises:

(a) diluting the molasses to provide a diluted molasses having a solids content within the approximate range of 20—50%,
(b) providing a chromatographic column of an alkali metal salt of a polystyrene sulfonate cation exchange resin cross-coupled with from 2 to 12 weight percent of divinylbenzene, the resin being of uniform particle size and having a mean particle size within the range of 0,84 to 0,037 mm (20 to 400 U.S. mesh),
(c) submerging the column of resin in water,
(d) introducing the diluted molasses in uniform supply to the resin surface at the top of the column,
(e) eluting the molasses from the column with water to provide an eluate, and
(f) recovering from the downstream side of the resin bed a fraction which consists principally of betaine.

There are also provided particular embodiments of that invention (see Claims 2 to 10).

A suitable raw material for betaine production is sugar beet molasses, which normally contains 3—8% of betaine on a dry solids basis. Both rest molasses from a desugarization process and vinasse from a fermentation process are high in betaine and are naturally also very suitable raw materials.

Betaine hydrochloride, which is used in pharmaceutical preparations, for example, can be prepared from the betaine-rich fraction obtained by the process of the present invention by a conventional process using an equivalent amount of hydrochloride acid.

A flow chart giving a general description of the process of the present invention is shown in Figure 1 of the drawings. Referring to Figure 1 and in accordance with the process of the present invention, molasses containing betaine is diluted to a solids content of 25—50%, preferably 35—40%, and fed to a large scale chromatographic column. The column contains a strong cation exchange resin in alkali metal form; sodium is generally the preferred alkali metal as being more economical. The column of resin is covered with water prior to feeding the diluted molasses thereto. On completion of the molasses feed step, the column is eluted with water at 60—90°C and the eluate is collected as several fractions.

The resin used in the column is preferably an alkali metal salt of sulphonated polystyrene exchange resin crosslinked with from about 2 to about 12 weight percent, and more preferably, from about 3 to about 9 weight percent divinylbenzene (DVB). The resin is of uniform particle size and has a mean bead diameter preferably within the range of about 0,84 to 0,037 mm (20 to 400 U.S. mesh), and most preferably in the approximate range of 0.2—0.5 mm. The height of the resin bed is from about 2.5 to about 10 meters. The feed rate is 0.5—2 cubic meters per hour per square meters of the cross sectional area of the resin column ($m^3/h/m^2$). The feed is preferably a betaine-containing beet molasses, a rest molasses, or vinasse, which is diluted with water to contain about 25—50 weight percent dry substance, preferably about 35—40%.

On elution with water, there is recovered from the column as eluate, a first nonsugar waste fraction, a second sugar-containing fraction, and a third fraction consisting principally of betaine. The nonsugar and sugar fractions are subjected to further treatment to recover sugar and rest molasses. These further treatment processes are previously described in the literature and are not part of this invention.

Where feed solutions having a relatively low sugar level are used, the second, sugar-containing fraction may not contain commercially significant quantities of sugar. In that case, the fraction may be used as a cattle food, or a portion or all of it may be returned to the system with the next feed. Further, it has been found that successive feeds of dilute molasses with predetermined feeding intervals, followed by elution with water, may be accomplished. When this is done, it is possible, if desired, to partly overlap the feeds. Thus, the betaine fraction on the column from the preceding feed is eluted using the dilute molasses from the following feed as eluate. In this case, the last fraction of the first feed contains the betaine from the first feed, together with a small portion of the other ingredients of the second feed. An advantage of this procedure is that because of the shorter time between feeds, the total processing time for a given quantity of molasses is substantially reduced.

Betaine is recovered from the fraction consisting principally of betaine termed "Betaine Fraction" in Figure 1, by first evaporating it to from about 77% to about 81%, preferably about 80% dry substance concentration. The solution is then seeded with anhydrous betaine crystals and anhydrous betaine is crystallized by maintaining the temperature at 75—85°C., under a vacuum within the range of about 80—120 millibar during the crystallization. A conventional vacuum crystallizer, i.e. of the type used in the sugar industry, is suitable for carrying out this step of the process. The water is evaporated, causing the crystals to grow. When crystallization is substantially complete, as represented by Crystallization Ia in Figure 1, the anhydrous betaine crystals are separated from the mother solution by centrifugation. The run off syrup from the centrifugation is concentrated to 80—90% solids, seeded with anhydrous betaine crystals, and an additional amount of anhydrous betaine crystals is recovered by crystallization in a vacuum crystallizer, as shown at Crystallization Ib in Figure 1. In the second crystallization, Ib, the temperature is maintained at 80—90°C. under a vacuum within the range of about 60—100 millibar.

The crystallization time in the first crystallization, Ia, is 4—10 hours, while in the second, about 6—12 hours are required. The yields are 50—55% of betaine from the first crystallization and 45—

50% of betaine from the second. The purity of the crystals is 99% in the first and 98% in the second crystallization. The first and second crystallization procedures just described as Crystallization Ia and Ib provide a product which may be described as a chemically pure betaine product.

Pharmaceutical grade betaine monohydrate can be recovered by dissolving in water the crude betaine crystals obtained in Crystallization Ia and Ib to form a solution having about 60% solids, subjecting the thus formed solution to color removal by conventional activated carbon/filtration treatment, and recrystallizing the betaine from water in a vacuum crystallizer at 75—85°C., with a vacuum in the range of about 100—180 millibar. The crystallization time under these conditions ranges from 2—4 hours, the yield of betaine is 50—55%, based on the total betaine in the feed, and the purity of the crystals is over 99.8%. This stage of the process is represented in Figure 1 as Crystallization II.

A different route of preparing pure betaine can also be followed. This betaine may be separated from the molasses by chromatographic separation in two steps: a crude separation in order to collect a betaine-rich fraction which is then separated a second time to recover a pure betaine solution. A material balance for the two-step separation process is shown in Figure 7. The purity of the betaine solution which is recovered from the second separation step is 90%. From this solution betaine is crystallized. The process is described in detail in the Examples 7—8.

In conducting the betaine recovery process of the present invention, recourse may be had to the use of equipment found in the prior art. The chromatographic column and process described in U.S. Patent No. 3,928,913 as well as the feeding device for the column described in U.S. Patent No. 3,814,253 may be used. Further, automatic control of the fractionation process based upon measurement of density and optical rotation of sucrose as described in U.S. Patent No. 3,826,905 may be employed. Additional automatic measurements of process variables such as conductivity may be employed and micro-processors may be used to advantage in making automatic calculations and in carrying out control procedures. Crystallization of anhydrous betaine and of betaine monohydrate may be carried out in conventional vacuum crystallizers with forced ciculation of the type used in sucrose production. The betaine crystals may be separated from their mother liquor in centrifuges such as the type normally used to separate sucrose crystals from molasses.

This invention also relates to the production of betaine from inverted molasses (Hongisto, H. and Heikkilä, H.; Desugarisation of cane molasses by the Finnsugar process, Proceedings XVI Congress of International Society of Cane Sugar Technologists, Sao Paulo 1977 Vol. 3 pages 3031—3098). In the chromatographic separation of an inverted molasses the betaine is separated from the non-sugars. The invert sugar monosaccharides partly overlap the betaine but a betaine-rich fraction can be obtained.

From the betaine-rich fraction the betaine is recovered by conventional ion-exchange treatment (as described on page 2).

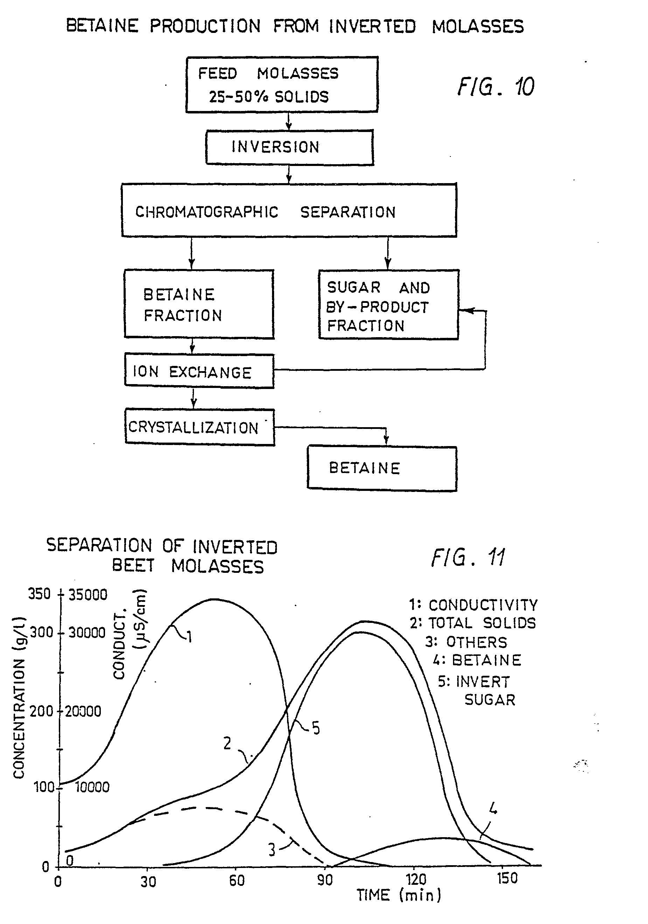

A flow chart of betaine recovery from inverted molasses is shown in Figure 10.

In Figure 11, the chromatographic separation of inverted molasses is shown.

In accordance with the process of the present invention, beet molasses is inverted by acid or enzymic treatment according to conventional methods. The inverted molasses is subjected to a chromatographic separation as described above. A betaine-rich fraction, which contains a part of the invert sugar monosaccharides, is recovered and subjected to ion-exchange treatment according to conventional methods. The invert sugar fraction from the ion-exchange column is combined with the sugar fraction from the chromatographic separation. The betaine is eluted from the ion-exchange column by diluted ammonia (or other suitable eluent) From the neutralized solution betaine is crystallized as anhydrous betaine or as betaine hydrochloride.

The invention will be further described with reference to the following working examples:

Example 1

Recovery of betaine from beet molasses

Betaine was recovered from beet molasses by diluting the molasses and passing it to a chromatographic column, the process and column having the following characteristics:

Chromatographic column

Sulphonated polystyrene-divinylbenzene cation exchange resin in $Na^+$-form. 5.5% DVB. Mean bead diameter 0.45 mm. Bed Height 6.1 m. and bed diameter 2.76 m. The bed was initially totally immersed in water.

| | |
|---|---|
| Flow rate: | 5.85 $m^3/h$ (0.977 $m^3/h/m^2$) |
| Temperature: | 82°C. |
| Eluent: | Water |
| Feed: | 1455 kg dry substance in the form of beet molasses, diluted with water to 39% dry substance. |

Composition of solids (% on dry substance)

| | |
|---|---|
| Sucrose | 62.2 |
| Betaine | 6.9 |
| Other Solids | 30.9 |

Seven separate fractions were collected during the large scale chromatographic separation, as shown in Figure 1a of the drawings and Table 1. The composition of the fractions is shown in Table 1 below. Fraction 2 is the waste fraction and is removed from the process for subsequent use as animal food, a fermentation substrate, or the like. Fraction 5 is the sugar fraction and Fraction 7 the betaine fraction. Fractions 1, 3, 4 and 6 are recycled to the process by combining them with the molasses feed stock for subsequent runs.

The recovered betaine fraction contained 72% of the betaine in the feed. The purity of the fraction was 80.6% on dry substance basis.

TABLE 1
Composition of fractions from beet molasses separation (Ex. 1)

| Fraction | 1 | 2 | 3 | 4 | 5 | 6 | 7 |
|---|---|---|---|---|---|---|---|
| Minutes | 0—17 | 17—65 | –72 | –80 | –115 | –120 | –140 |
| Total Solids Concentration g/100 g | 3.1 | 6.6 | 13.1 | 15.5 | 20.0 | 5.5 | 4.6 |
| Composition of Solids, weight % on dry substance | | | | | | | |
| Sucrose | 1.1 | 20.1 | 55.0 | 64.6 | 92.0 | 58.3 | 5.6 |
| Betaine | 12.5 | 0.4 | 0 | 0 | 1.2 | 37.6 | 80.6 |
| Other | 86.4 | 79.5 | 45.0 | 35.4 | 6.8 | 4.1 | 13.8 |

Several successive feeds were made with water being introduced to the top of the column between each feed as eluent. The resin column was at all times covered with liquid. From each feed, the betaine, which is eluted last as Fraction 7, was recovered just before the non-sugars (other) fraction of the following feed. The time between feeds was 140 minutes.

Example 2
Production of anhydrous betaine and betaine monohydrate

Anhydrous betaine and betaine monohydrate were recovered, and a material balance for the process is shown in Figure 2. Beet molasses was separated by large scale chromatography as described in Example 1. The betaine yield in the separation was 75% of the betaine in the feed, and the purity of the solution was 75% on dry substance. Again following the process described in Example 1, successive feeds of the diluted molasses were made, separations performed, and the betaine fractions obtained thereby from the eluent of each succeeding feed were combined. Water was used as eluent, and 140 minutes elapsed between each feed. The dilute betaine solution thus obtained as the combined betaine fraction contained 4.5% dry substance by weight and was evaporated to 80 weight percent concentration. The concentrated solution thus obtained was seeded with betaine crystals and anhydrous betaine was crystallized, as at Ia in Figure 2, at 75—85°C. under a vacuum of about 100 millibar. The yield of betaine crystals was 55%. The purity of the crystals was 99%. The crystallization was carried out in a conventional sugar crystallizer with forced circulation. The crystallization time was 6 hours.

The crystals were separated from the mother liquor by centrifugation in a conventional sugar centrifuge. The run off syrup was evaporated, and by crystallization at 80—90°C., Ib in Figure 2, and at a vacuum of 60—100 millibar, an additional amount of betaine anhydride crystals was recovered. The yield for this crystallizations step was 48% and the purity of the crystals 98%. The crystallization time was 8 hours. The run off syrup from the centrifugation of the crystals from this second crystallization, Ib, was recycled to the feed solution.

In order to produce pharmaceutical grade betaine monohydrate, the anhydrous betaine crystals obtained were dissolved in water to provide a 60% by weight solution of solids, and the solution was purified by treatment with activated carbon followed by filtration. From the purified solution, betaine

monohydrate was crystallized at 80°C. in a sugar crystallizer, at Crystallization II. The yield was 55%, and the purity of the betaine crystals almost 100%. The run off syrup was recycled as feed for crystallization step Ia.

Example 3
Production of crystalline betaine

A material balance for the production of crystalline betaine is shown in Figure 3.

Beet molasses was separated by large scale chromatography as in Examples 1 and 2. Successive feeds were made and the collected betaine fractions combined. The betaine yield in the fractionation was 80%, and the purity of the betaine solution was also 80% on dry substance. The concentration of the betaine solution was 4.0 weight percent. The dilute betaine solution was concentrated by evaporation to ca 80% solids, seeded, and anhydrous betaine was crystallized as in Example 2. The crude anhydrous betaine crystals were dissolved in water, and the solution subjected to conventional color removal and filtration. From the purified solution, betaine monohydrate was crystallized. The yield was 72 kg betaine anhydride and 100 kg betaine monohydrate (anhydrous basis).

Example 4
Separation of desugarized rest molasses

Betaine was recovered from desugarized rest molasses by passing it through a chromatographic column having the characteristics and using the operating conditions set forth below:

| | |
|---|---|
| Column: | Sulphonated polystyrene-divinylbenzene cation exchange resin in $Na^+$-form. Mean bead diameter 0.42 mm. Bed height 5.4 m. Bed diameter 0.225 m. |
| Flow rate: | 0.04 $m^3/h$ (1.007 $m^3/h/m^2$) |
| Temperature: | 85°C. |
| Feed: | Desugarized rest molasses. Dry substance 12 kg as a 40 weight percent solution. |

Composition of solids (% on dry substance)

| | |
|---|---|
| Sucrose | 32.4 |
| Betaine | 9.1 |
| Other Solids | 58.5 |
| Eluent: | Water |

The result of the separation is shown in Figure 4. The Figure shows the situation when succesive feeds were made. The nonsugars (other) of the following feed are eluted right after the betaine of the preceding feed. The time between feeds was 145 minutes, and during this time, water was continuously supplied to the top of the column as an eluent and in an amount sufficient to maintain a liquid level above the resin in the column.

Table 2 below shows the composition of the collected 4 fractions. Fraction 1 is a waste fraction, Fraction 3 is the betaine fraction, and Fractions 2 and 4 are recycled to the process in order to increase the yield. Because of the relatively low level of sucrose in the feed, no sugar fraction was recovered.

TABLE 2
Composition of fractions from rest molasses separation (Ex. 4)

| Fraction | 1 | 2 | 3 | 4 |
|---|---|---|---|---|
| Minutes | 10—115 | −125 | −153 | −155 |
| Total Solids Concentration g/100 g | 14.1 | 9.0 | 5.1 | 3.5 |
| Compositions of solids, weight % on dry substance | | | | |
| Sucrose | 34.6 | 33.5 | 8.8 | 0 |
| Betaine | 1.5 | 29.7 | 76.0 | 60.1 |
| Other | 63.9 | 36.8 | 15.2 | 39.9 |

Example 5
Separation of beet molasses

Beet molasses was diluted to 39.6% dry solids content and introduced at the top of a chromatographic column of the following characteristics and under the following conditions:

| | |
|---|---|
| Column: | Sulphonated polystyrene-divinylbenzene cation exchange resin in $Na^+$-form. 6.5% DVB. Mean bead diameter 0.44 mm. Bed height 4.4 m. Bed Diameter 60 cm. |
| Temperature: | 81.5°C. |
| Flow rate: | 0.246 $m^3/h$ (0.870 $m^3/h/m^2$) |
| Feed: | Beet molasses, 64 kg dry substance as a 39.6% water solution. |

Composition of solids (% on dry substance)

| | |
|---|---|
| Sucrose | 66.5 |
| Betaine | 5.3 |
| Other Solids | 28.2 |
| Eluent: | Water |

The fractionation is shown in Figure 5. When successive feeds were made, the nonsugars of the following feed were eluted just after the betaine of the preceding feed. The time between feeds were 130 minutes. Water was used as eluent between feeds, and the liquid level was maintained at all times above the resin level in the column.

Table 3 below shows the distribution of components into the 4 collected fractions. Fraction 1 is the waste or "rest molasses" fraction, Fraction 2 is recycled, Fraction 3 is the sugar fraction, and Fraction 4 the betaine fraction.

TABLE 3
Composition of fractions from beet molasses separation (Ex. 5)

| Fraction | 1 | 2 | 3 | 4 |
|---|---|---|---|---|
| Minutes | 5—60 | 60—80 | —105 | —135 |
| Total Solids Concentration g/100 g | 6.1 | 18.7 | 26.1 | 3.2 |
| Composition of solids, weight % on dry substance | | | | |
| Sucrose | 30.4 | 67.4 | 90.9 | 8.9 |
| Betaine | 1.1 | 0 | 0 | 81.3 |
| Other | 68.5 | 32.6 | 9.1 | 9.8 |

Example 6
Vinasse separation

Betaine was recovered from vinasse by chromatographic separation followed by crystallization. Vinasse is a fermentation by-product which contains high amounts of betaine. The separation was carried out on a bench scale column. The conditions were:

| | |
|---|---|
| Feed: | 0.1 liter diluted vinasse. concentration (c) 30 g/100 g |
| Flow rate: | 360 ml/h (0.237 $m^3/h/m^2$) |
| Resin: | Zerolit 225, Na-form, 3.5% DVB |
| Column Height: | 0.83 m |
| Particle size: | 0.23 mm |
| Temperature: | 60°C. |
| Column Diameter: | 4.4 cm |

Composition of feed (% on dry substance)

| | |
|---|---|
| Monosaccharides | 10.1 |
| Oligosaccharides | 4.8 |
| Betaine | 14.0 |
| Others | 71.1 |

The time between two successive feeds was 135 minutes. Water was used as the eluent between feeds. From the eluent, fractions were collected as shown in the following Table 4:

TABLE 4
Composition of fractions from vinasse separation (ex. 6)

| Fractions | 1 | 2 | 3 | 4 |
|---|---|---|---|---|
| Minutes | 0—10.0 | 10.0—117.5 | —120 | —135 |
| Total Solids Concentration g/100 g | 1.7 | 4.0 | 5.5 | 3.5 |
| Compositions of the fractions % | | | | |
| Monosaccharides | 8.6 | 8.9 | 29.9 | 15.5 |
| Betaine | 42.4 | 3.9 | 62.8 | 75.5 |
| Oligosaccharides and Others | 49.0 | 87.2 | 7.3 | 9.0 |

The feed capacity was 10.4 kg ds/h/$m^3$ resin. The separation is shown graphically in Figure 6. From the betaine fraction (Fraction 4), betaine was recovered by crystallization as in Examples 2 and 3. The total yield was increased by recirculations, as in Example 1, to over 80% of the betaine in the feed.

Example 7
Betaine production, two separations

Betaine was prepared from beet molasses by separation in two steps: a crude separation to increase the betaine amount in the solution and a second separation to recover a pure betaine solution. The chromatographic separations were carried out as in Example 1. The conditions in the crude separation, step 1, were as follows:

| | |
|---|---|
| Feed: | 2510 l beet molasses. The concentration of the feed was 39.9 g solids/100 g |
| Flow rate: | 5.49 $m^3$/h (0.918 $m^3/h/m^2$) |
| Resin: | Duolite C 20 Na-form, 6.5% DVB |
| Bed Height: | 6.1 m |
| Particle Size: | 0.45 mm |
| Bed Diameter: | 276 cm |
| Time Between Feeds: | 105 minutes |

Composition of feed (% on dry substance)

| | |
|---|---|
| Monosaccharides | 0.3 |
| Disaccharides | 62.4 |
| Betaine | 10.6 |
| Others | 26.7 |

Several successive feeds were carried out, with elution with water between feeds. The time between feeds, 105 minutes, was arranged so that the betaine fraction is eluted from the column during the early stages of the next successive feed. Thus, the betaine fraction, normally collected as the last fraction, is collected as the first fraction of the next successive series of collected fractions. All feeds were similar and the conditions during successive runs were kept unchanged.

The resultant of the crude separation, Separation 1 of Figure 7, is shown in Figure 8. The eluate was collected as six fractions, the composition of which is shown in the following Table 5:

TABLE 5
Composition of fractions from separation 1, Example 7

| Fraction | 1 | 2 | 3 | 4 | 5 | 6 |
|---|---|---|---|---|---|---|
| Minutes | 0—25 | 25—35 | —52.5 | —74.5 | —102.5 | —105 |
| Total Solids Concentration g/100 g | 7.8 | 7.8 | 9.9 | 15.6 | 22.2 | 9.4 |
| Composition of the fractions % on dry substance | | | | | | |
| Monosaccharides | 1.9 | 00 | 00 | 00 | 00 | 00 |
| Disaccharides | 7.3 | 8.9 | 37.4 | 61.5 | 92.0 | 70.3 |
| Betaine | 59.6 | 32.6 | 2.8 | 00 | 1.0 | 17.7 |
| Others | 31.2 | 58.5 | 59.8 | 38.5 | 7.0 | 12.0 |

The feed capacity was 21.9 kg ds/h/$m^3$. After the several separations were carried out, the betaine-rich fractions (Fraction 1) were combined to form the feed solution of the second fractionation, Separation 2 of Figure 7. Fractions 2, 4 and 6 were recirculated. The combined solution was evaporated to 39.7% concentration. A concentration range of about 35—40% solids may be used. Fraction 3 was discarded as waste, while Fraction 5 was recovered as the sugar fraction.

The conditions in the second fractionation, Separation 2 of Figure 7, were:

| | |
|---|---|
| Feed: | 3000 l concentration 39.7 g/100 g |
| Flow rate: | 5.4 $m^3$/h (0.903 $m^3$/h/$m^2$) |
| Resin: | Duolite C 20, Na-form, 6.5% DVB |
| Bed Height: | 6.2 m |
| Particle Size: | 0.45 mm |
| Bed Diameter: | 276 cm |
| Time Between Feeds: | 180 minutes |

The result of the fractionation is shown in Figure 9. Four fractions were taken as shown in the following Table 6.

TABLE 6
Composition of fractions from separation 2, Example 7

| Fraction | 1 | 2 | 3 | 4 |
|---|---|---|---|---|
| Minutes | 0—95 | 95—105 | —179 | —180 |
| Total Solids Concentration g/100 g | 6.1 | 4.6 | 11.9 | 3.9 |
| Compositions of the fractions % on dry substance | | | | |
| Monosaccharides | 1.1 | 20.6 | 3.2 | 00 |
| Disaccharides | 32.0 | 17.1 | 0.1 | 00 |
| Betaine | 2.5 | 57.4 | 94.9 | 87.0 |
| Others | 64.4 | 4.9 | 1.8 | 13.0 |

The feed capacity was 12.5 kg ds/h/$m^3$. The betaine fraction (Fraction 3) contained nearly 95% of ds betaine. Betaine was recovered from the betaine fraction, Fraction 3, by crystallization as described below in Example 8. Fraction 1 was discarded, and Fractions 2 and 4 were returned to the system in the next batch. The final run off from the crystallizations was also returned to the feed to the second separation step (Figure 7).

Example 8
Crystallization of betaine monohydrate

Beet molasses was separated by large scale chromatography in two steps as described in Example 7. In the two step fractionation process, the betaine yield is 86% and the purity of the betaine solution 90%. The dilute betaine solution was evaporated to 76 weight percent concentration. The concentrated solution was seeded with betaine monohydrate crystals, and betaine monohydrate was crystallized at 80—85°C. under a vacuum of 130—180 millibar. The yield of betaine crystals was 55% (dry basis) and the purity of the crystals was 99.5%. The crystallization time was 4 hours. The crystals were separated from the mother liquor by centrifugation in a conventional sugar centrifuge. From the run off syrup anhydrous betaine was crystallized as in Example 2. The final run off syrup was recirculated to the separation as shown in the scheme of Figure 7. The total betaine yield was 84.7%.

Example 9
Crystallization of anhydrous betaine

A betaine solution of 90% purity was prepared as in Example 7. The solution was evaporated to

79% concentration and seeded with anhydrous betaine crystals. Anhydrous betaine was crystallized at 90—95°C. under a vacuum of 170—200 millbar. The yield was 55% and the purity of the crystals 99%. The crystallization time was six hours. The run off syrups were treated as in Example 8.

Example 10
Chromatographic separation of inverted beet molasses

| | |
|---|---|
| Resin column | Sulphonated polystyrene-divinylbenzene cation exchange resin in $Na^+$-form. Mean bead diameter 0.42 mm. Bed height 5.2 m, diameter of column 0.225 m. The resin was totally immersed in water. |
| Eluent | Water |
| Flow rate | 0.880 $m^3/h/m^2$ |
| Temperature | 78°C |
| Feed solution | Enzymically inverted beet molasses. Total amount 13.2 kg dry substance as 35.5, weight % solution |
| | Composition: Monosaccharides (invert sugar) 70% on dry substance |
| | Di- and higher saccharides 3.6% |
| | Betaine 5.7% |
| | Others 20.7% |

The chromatographic separation was carried out as described previously. From the effluent 5 fractions were collected. The analysis is shown in table 7 and the separation is presented graphically in Figure 11.

Fraction 1 is a waste fraction, fractions 2 and 5 are recycled and fraction 3 and 4 collected as product fractions. The betaine fraction contains 85% of the betaine present in the feed. (Fraction 4).

The betaine fraction is fed to an ion-exchange column, which absorbs the betaine, while the sugars are not absorbed. The eluted sugar solution is combined with the sugar product fraction (Fraction 3) from the chromatographic separation. The ion-exchanger is then eluted with diluted ammonia solution to recover the absorbed betaine. From the eluted solution betaine is crystallized as anhydrous betaine as described previously.

TABLE 7
Chromatographic separation of inverted molasses, composition of fractions

| Fraction | 1 | 2 | 3 | 4 | 5 |
|---|---|---|---|---|---|
| Time (minutes) | 0—65 | —75 | —105 | —145 | —155 |
| Total solids kg | 2.7 | 1.0 | 4.8 | 4.5 | 0.1 |
| Concentration g/100 g | 7.4 | 16.2 | 25.0 | 18.0 | 2.3 |
| Composition of fractions in % on dry substance | | | | | |
| Monosaccharides (invert sugar) | 12.1 | 58.4 | 92.3 | 85.0 | 5.2 |
| Di- and higher saccharides | 10.5 | 8.0 | 2.5 | 0.0 | 0.0 |
| Betaine | 0.0 | 0.0 | 1.1 | 14.1 | 40.4 |
| Others | 77.4 | 33.6 | 4.1 | 0.9 | 54.4 |

Fraction 4 is the betaine fraction and fraction 3 the invert sugar fraction. The betaine fraction contains 14.1% betaine and 85% invert sugar but only traces of other substance. When the betaine-rich fraction is subjected to ion-exchange treatment a purified betaine is recovered.

**Claims**

1. A process for recovering betaine from molasses which comprises:

a) diluting the molasses to provide a diluted molasses having a solids content within the approximate range of 20—50%,
b) providing a chromatographic column of an alkali metal salt of a polystyrene sulfonate cation exchange resin cross-coupled with from 2 to 12 weight percent of divinylbenzene, the resin being of uniform particle size and having a mean particle size within the range of 0,84 to 0,037 mm (20 to 400 U.S. mesh);
c) submerging the column of resin in water,
d) introducing the diluted molasses in uniform supply to the resin surface at the top of the column,
e) eluting the molasses from the column with water to provide an eluate, and
f) recovering from the downstream side of the resin bed a fraction which consists principally of betaine.

2. The process of claim 1, wherein the diluted molasses is introduced to the column in uniform supply to the resin surface at the top of the column at a flow rate of 0,5 to 2,0 cubic meters per hour per squaremeters of the cross-section of the resin column, and wherein from the downstream side of the resin bed is recovered.

(1) a first non-sugar waste fraction,
(2) a second fraction containing a substantial proportion of the sugars of the feed solution, and
(3) a third fraction consisting principally of betaine.

3. The process of claim 1 wherein the fraction which consists principally of betaine is concentrated to 35—40% solids to form a concentrated crude betaine feed solution, the concentrated feed solution is introduced in uniform supply to a water-submerged chromatographic column as described in claim 1, and there is recovered from the downstream side of the column, a waste fraction and a betaine fraction of purity substantially higher than that of the concentrated feed solution.

4. The process of claim 3 wherein the fractions are selected to include fractions of lesser purity for recycling.

5. The process of claims 1, 2 or 3 wherein the betaine fraction is concentrated by evaporation to a solids content within the range of 77 to 81% by weight, the concentrated solution is seeded with betaine crystals, the solution is subjected to crystallization procedures at 75—95°C, especially 75—85°C in the process of claim 2 and 85—95°C in the process of claim 3 with the application of vacuum, and the anhydrous betaine crystals thus obtained are separated from the solution leaving a run off syrup.

6. The process of claim 1 wherein an inverted molasse is diluted to provide a diluted solution having a solids content within the approximate range of 20—50%.

7. The process of claim 6 wherein the fraction consisting principally of betaine and containing a part of the invert sugar monosaccharides, is purified and concentrated by ion-exchange treatment, the betaine being eluted from the ion-exchange column by diluted ammonia and crystallized from the neutralized solution.

8. The process of claim 7 wherein the invert sugar fraction from the ion-exchange is combined with the sugar fraction from the chromatographic separation.

9. The process of one of the claims 1 to 8 wherein the anhydrous betaine crystals obtained by the crystallization process are dissolved in water to form a solution having about 60% solids, the solution is subjected to a color removal step provided by activated carbon treatment and filtration, and the betaine is recrystallized as monohydrate crystals from the solution at 80°C to recover crystals having a purity of nearly 100% betaine.

10. The process of one of the claims 1 to 9 wherein the run off syrup from the crystallization process is recycled to the diluted molasses feed solution.

**Patentansprüche**

1. Verfahren zur Gewinnung von Betain aus Melasse, dadurch gekennzeichnet, daß man

a) die Melasse so verdünnt, daß eine verdünnte Melasse mit einem Feststoffgehalt im ungefähren Bereich von 20 bis 50% erhalten wird,
b) eine Chromatographiesäule aus einem Alkalimetallsalz eines mit 2 bis 12 Gew.%% Divinylbenzol gekreuzt vernetzten Polystyrolsulfonat-Kationenaustauscherharzes verfügbar macht, wobei das Harz gleichmäßige Teilchengröße und eine mittlere Teilchengröße im Bereich von 0,84 bis 0,037 mm (20 bis 400 U.S. mesh) aufweist;
c) die Harzsäule in Wasser taucht,
d) die verdünnte Melasse in gleichmäßiger Zuführung auf die Harzoberfläche an der Oberseite der Säule einführt,

e) die Melasse aus der Säule mit Wasser eluiert und hierbei ein Eluat gewinnt und
f) aus der Ablaufseite der Harzsäule eine hauptsächlich aus Betain bestehende Fraktion gewinnt.

2. Verfahren nach Anspruch 1, worin die verdünnte Melasse in die Säule in gleichmäßiger Zuführung auf die Harzoberfläche an der Oberseite der Säule mit einer Strömungsgeschwindigkeit von 0,5 bis 2,0 $m^3/h/m^2$ des Querschnitts der Harzsäule aufgegeben wird, und worin von der Ablaufseite der Harzsäule

1) eine erste Nichtzucker-Ausschußfraktion,
2) eine zweite Fraktion, die einen wesentlichen Anteil der Zucker der Einsatzlösung enthält, und
3) eine hauptsächlich aus Betain bestehende dritte Fraktion

gewonnen werden.

3. Verfahren nach Anspruch 1, worin die hauptsächlich aus Betain bestehende Fraktion auf 35 bis 40% Feststoffe zur Bildung einer eingeengten rohen Betainausgangslösung eingeengt, die Beschickungslösung in gleichmäßiger Zuführung zu einer in Beispiel 1 beschriebenen, in Wasser untergetauchten Chromatographiesäule eingeführt wird und von der Ablaufseite der Säule eine Ausschußfraktion und eine Betainfraktion, die eine wesentlich höhere Reinheit als die eingeengte Beschickungslösung hat, gewonnen werden.

4. Verfahren nach Anspruch 3, worin die Fraktionen so gewählt werden, daß sie Fraktionen von geringerer Reinheit für die Kreislaufführung einschließen.

5. Verfahren nach Ansprüchen 1, 2 oder 3, worin die Betainfraktion durch Verdampfen auf einen Feststoffgehalt im Bereich von 77 bis 81 Gew.-% eingeengt, die eingeengte Lösung mit Betainkristallen geimpft, die Lösung Kristallisationsprozessen bei 75 bis 95°C, insbesondere 75 bis 85°C beim Verfahren von Anspruch 2 und 85 bis 95°C beim Verfahren von Anspruch 3 unter Anwendung von Vakuum unterworfen wird und die so erhaltenen wasserfreien Betainkristalle von der Lösung abgetrennt werden, wobei ein Ablaufsirup zurückbleibt.

6. Verfahren nach Anspruch 1, worin eine Invertmelasse so verdünnt wird, daß eine verdünnte Lösung mit einem Feststoffgehalt im ungefähren Bereich von 20 bis 50% erhalten wird.

7. Verfahren nach Anspruch 6, worin die hauptsächlich aus Betain bestehende und einen Teil der Invertzuckermonosaccharide enthaltende Fraktion durch Ionenaustauschbehandlung gereinigt und eingeengt wird, wobei das Betain aus der Ionenaustauschersäule mit verdünntem Ammoniak eluiert und aus der neutralisierten Lösung kristallisiert wird.

8. Verfahren nach Anspruch 7, worin die Invertzuckerfraktion aus dem Ionenaustausch mit der Zuckerfraktion aus der chromatographischen Trennung zusammengegeben wird.

9. Verfahren nach einem der Ansprüche 1 bis 8, worin die durch den Kristallisationsprozeß erhaltenen wasserfreien Betainkristalle in Wasser gelöst werden, um eine Lösung mit etwa 60% Feststoffen zu bilden, die Lösung einer durch Aktivkohlebehandlung und Filtration bewirkten Farbentfernungsstufe unterworfen und das Betain als Monohydratkristalle aus der Lösung bei 80°C umkristallisiert wird, wobei Kristalle mit einer Reinheit von nahezu 100% Betain gewonnen werden.

10. Verfahren nach einem der Ansprüche 1 bis 9, worin der Ablaufsirup aus dem Kristallisationsprozeß zur verdünnten Melasseausgangslösung im Kreislauf geführt wird.

**Revendications**

1. Procédé de récupération de la bétaïne à partir de mélasses, caractérisé en ce qu'on effectue les opérations suivantes:

a) dilution des mélasses pour obtenir des mélasses diluées d'une teneur en solides approximativement comprise dans l'intervalle de 20—50%;
b) préparation d'une colonne de chromatographie d'une résine échangeuse de cations composée du sel de métal alcalin d'un sulfonate de polystyrène, ladite résine étant couplée par réticulation avec de 2 à 12% en poids de divinylbenzène et ayant une dimension uniforme de particules, d'une moyenne comprise dans l'intervalle de 0,84 à 0,037 $\mu$m (correspondant aux tamis américains 20 à 400);
c) immersion de la colonne de résine dans l'eau;
d) introduction des mélasses diluées par alimentation régulière à la surface de la résine au sommet de la colonne;
e) élution des mélasses de la colonne, avec de l'eau, pour obtenir un éluat; et
f) récupération, du côté aval du lit de la résine, d'une fraction consistant principalement en bétaïne.

2. Procédé selon la revendication 1, caractérisé en ce qu'on introduit les mélasses diluées dans la colonne par un courant d'alimentation régulier à la surface de la résine au sommet de la colonne, à une vitesse de courant de 0,5 à 2,0 $m^3/h/m^2$ de section de la colonne de résine, et en ce qu'on récupère, du côté aval du lit de la résine:

1) une première fraction de résidus non sucrés,
2) une deuxième fraction contenant une proportion notable de sucres de la solution d'alimentation, et
3) une troisième fraction consistant principalement en bétaïne.

3. Procédé selon la revendication 1, caractérisé en ce que la fraction principalement constituée de bétaïne est concentrée à 35—40% de solides pour former une solution d'alimentation concentrée de bétaïne brute, qui est introduite par alimentation régulière dans une colonne chromatographique immergée dans l'eau, comme décrit dans la revendication 1, et en ce qu'on récupère, du côté en aval de la colonne, une fraction de résidus et une fraction de bétaïne de pureté notablement plus élevée que celle de la solution concentrée d'alimentation.

4. Procédé selon la revendication 3, caractérisé en ce qu'on choisit les fractions pour inclure des fractions de pureté moins élevée, pour les recycler.

5. Procédé selon l'une des revendications 1, 2 et 3, caractérisé en ce qu'on concentre la fraction de bétaïne, par évaporation, jusqu'à une teneur en solides comprise dans l'intervalle de 77 à 81% en poids, on ensemence la solution concentrée avec des cristaux de bétaine, on soumet la solution à une technique de cristallisation à 75—95°C, particulièrement à 75—85°C dans le procédé de la revendication 2, et à 85—95°C dans le procédé de la revendication 3, avec application du vide, et on sépare de la solution les cristaux de bétaïne anhydre ainsi obtenus, en laissant un sirop à éliminer.

6. Procédé selon la revendication 1, caractérisé en ce qu'on dilute une mélasse inversée pour obtenir une solution diluée d'une teneur en solides approximativement comprise dans l'intervalle de 20—50%.

7. Procédé selon la revendication 6, caractérisé en ce que la fraction, principalement constituée de bétaïne et contenant une partie des monosaccharides du sucre inversé, est purifiée et concentrée par un traitement d'échange d'ions, la bétaïne étant éluée de la colonne échangeuse d'ions par de l'ammoniaque diluée et cristallisée à partir de la solution neutralisée.

8. Procédé selon la revendication 7, caractérisé en ce que la fraction de sucre inversé provenant de l'échange d'ions, est combinée avec la fraction de sucre provenant de la séparation chromatographique.

9. Procédé selon l'une des revendications 1 à 8, caractérisé en ce qu'on dissout dans de l'eau les cristaux de bétaïne anhydre obtenus dans le processus de cristallisation, pour former une solution à environ 60% de solides, on soumet la solution à une opération de décoloration effectuée par un traitement au charbon actif et une filtration et on recristallise le bétaïne sous forme de cristaux monohydrates à partir de la solution à 80°C pour récupérer des cristaux ayant une pureté de près de 100% de bétaïne.

10. Procédé selon l'une des revendications 1 à 9, caractérisé en ce que le sirop éliminé dans le processus de cristallisation est recyclé dans la solution d'alimentation de mélasses diluées.

PRODUCTION OF BETAINE

FIG. 1

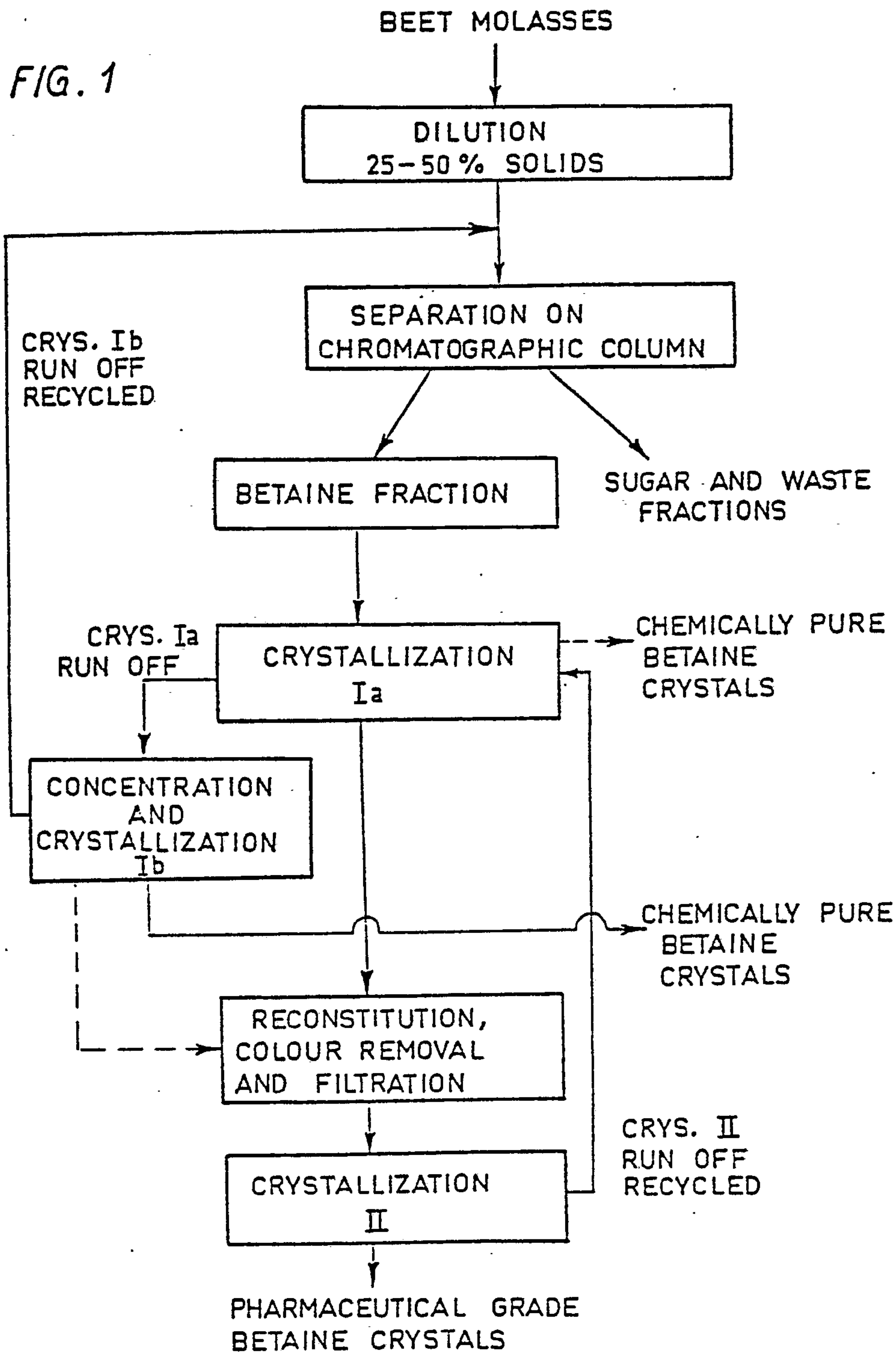

MATERIAL BALANCE FOR BETAINE PRODUCTION FROM BEET MOLASSES

FIG. 2

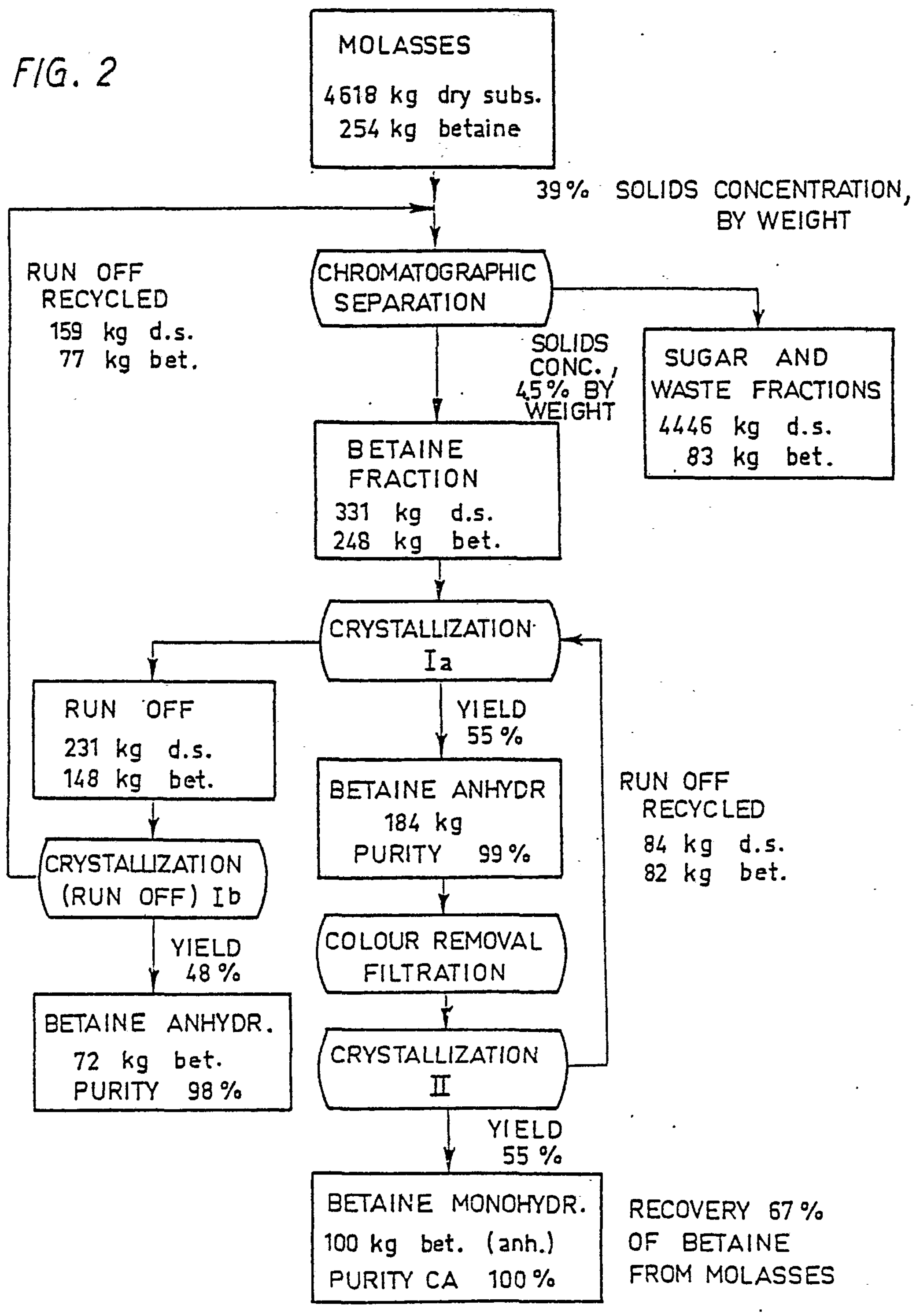

MATERIAL BALANCE FOR THE PRODUCTION OF CRYSTALLINE BETAINE

FIG. 3

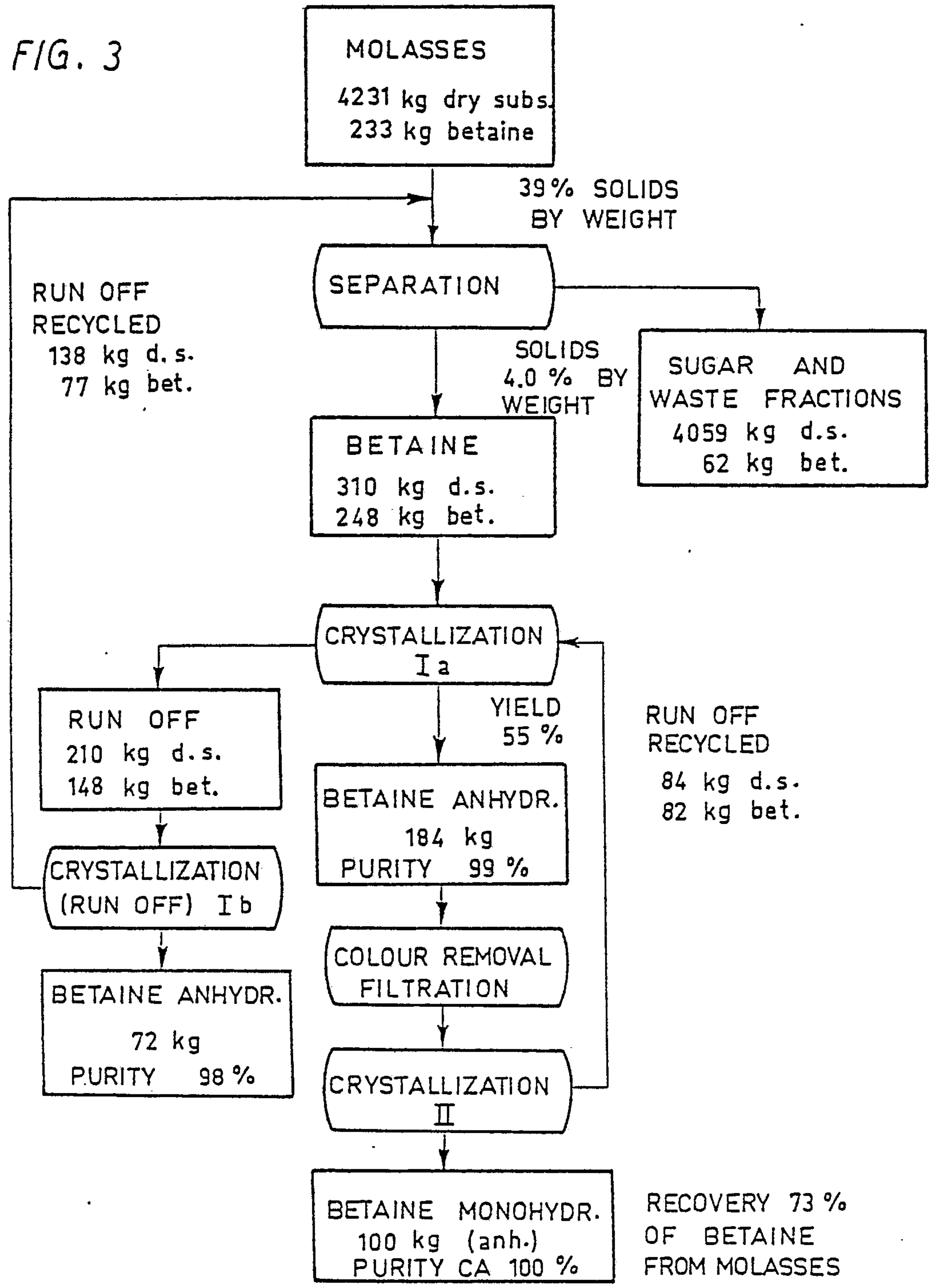

SEPARATION OF BEET MOLASSES

FIG. 1a

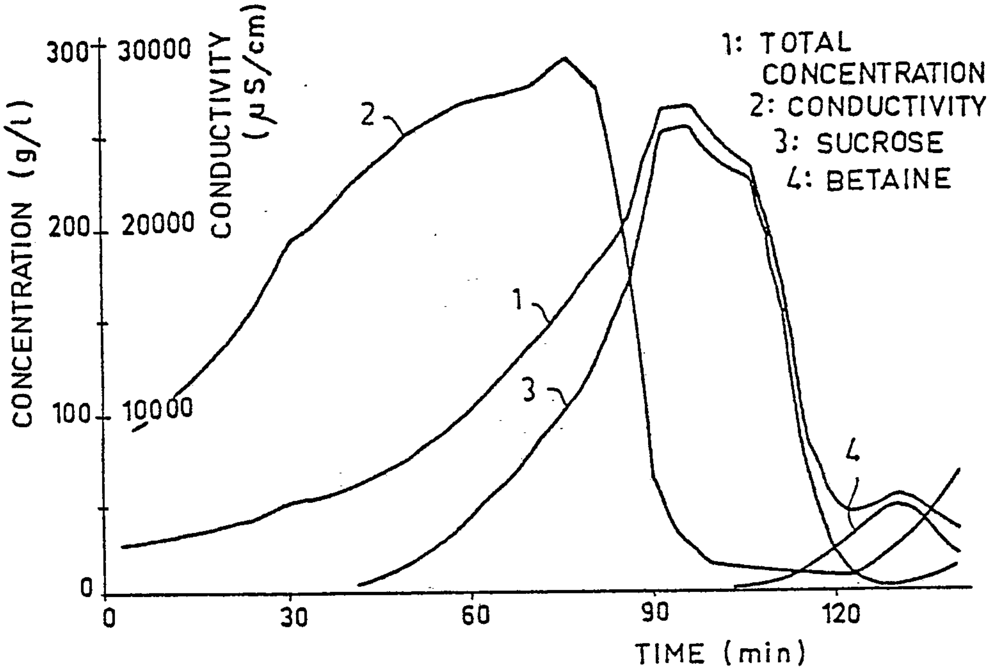


SEPARATION OF REST MOLASSES

FIG. 4

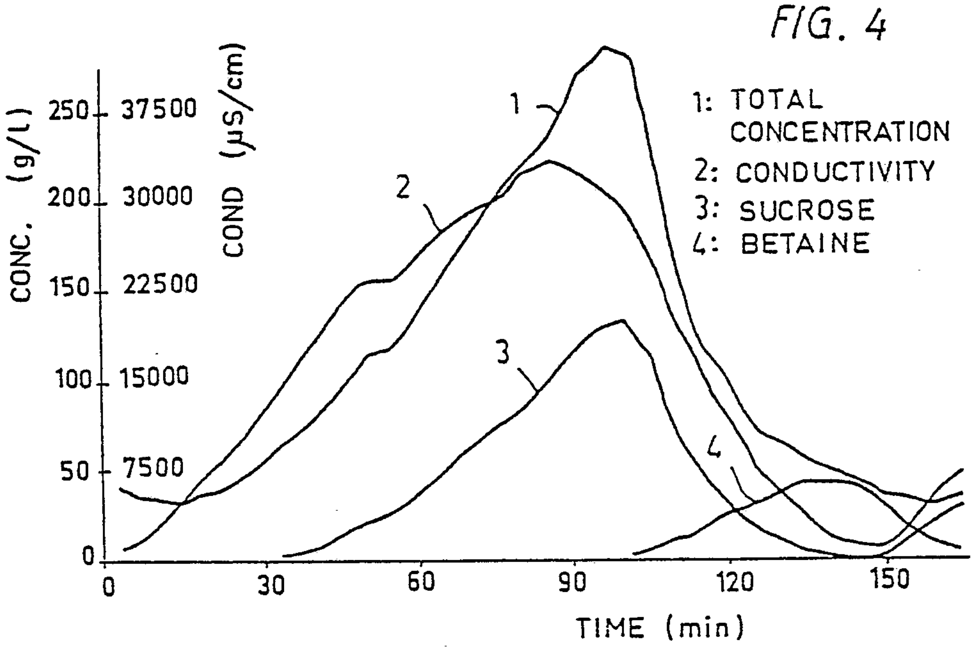

SEPARATION OF MOLASSES. SUCCESSIVE FEEDS

FIG. 5

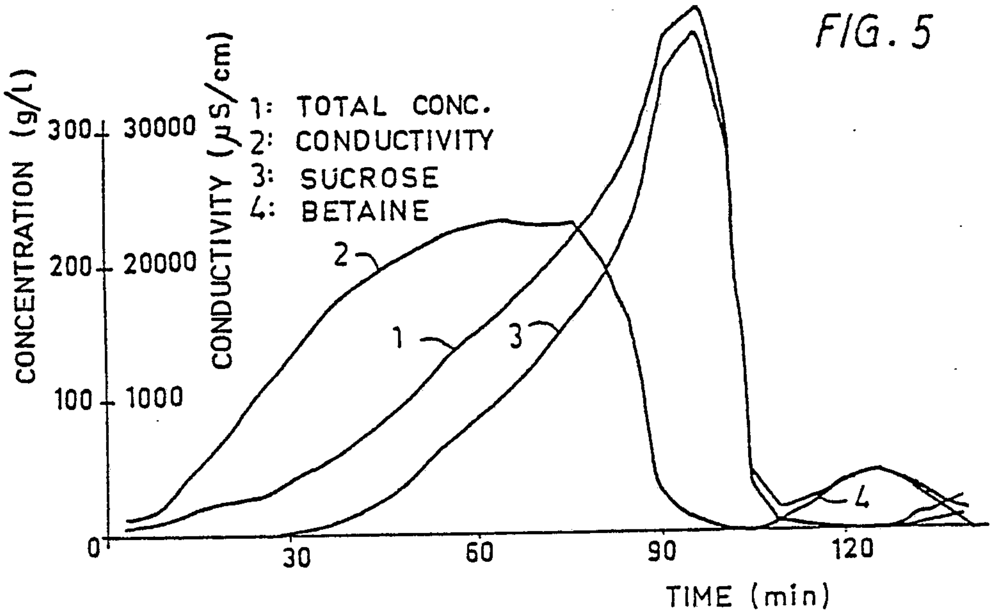


VINASSE SEPARATION

FIG. 6

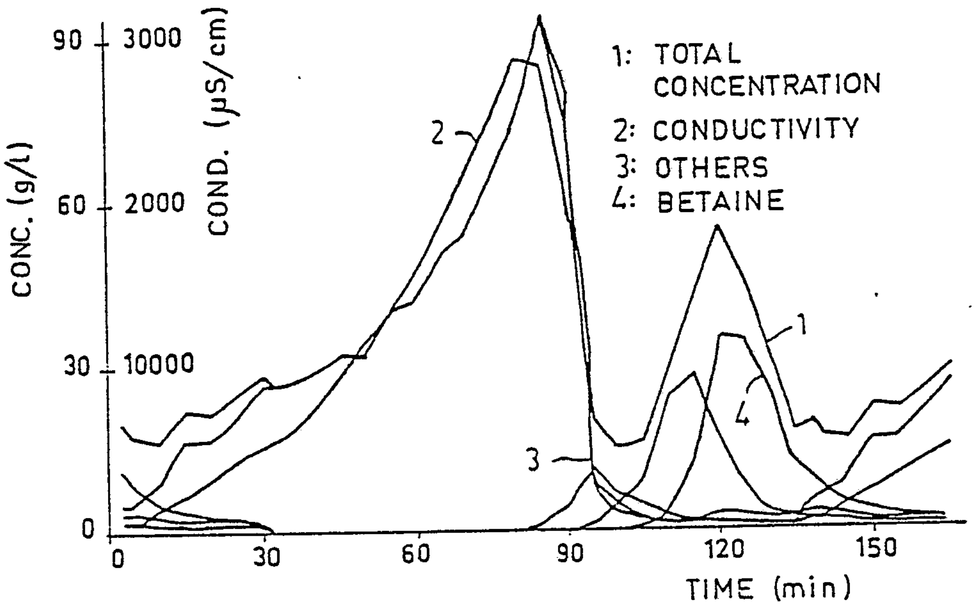

BETAINE PRODUCTION . 2 SEPARATIONS

FIG. 7

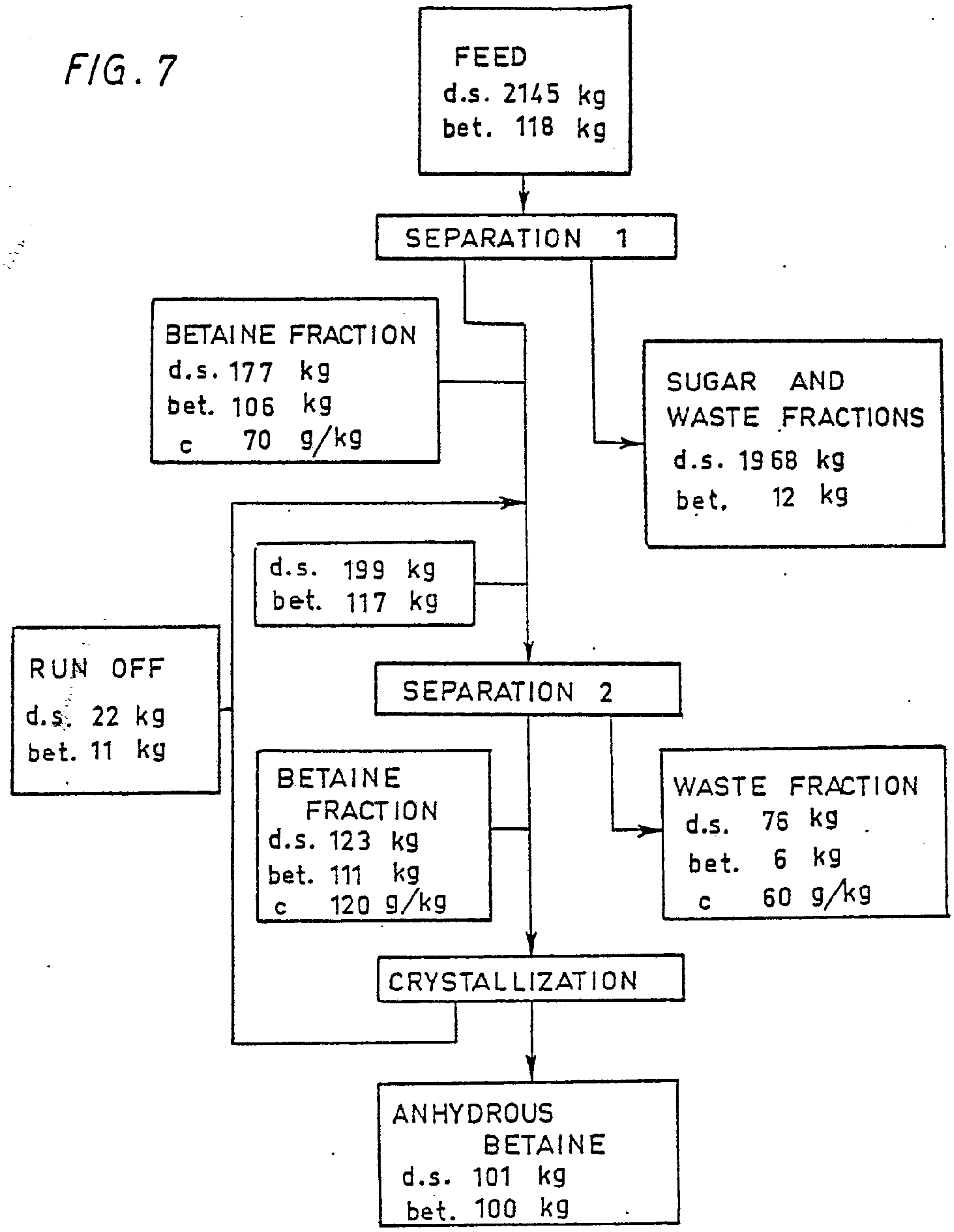


YIELD 84.7 %
FROM MOLASSES

STEP I. MOLASSES SEPARATION

FIG. 8

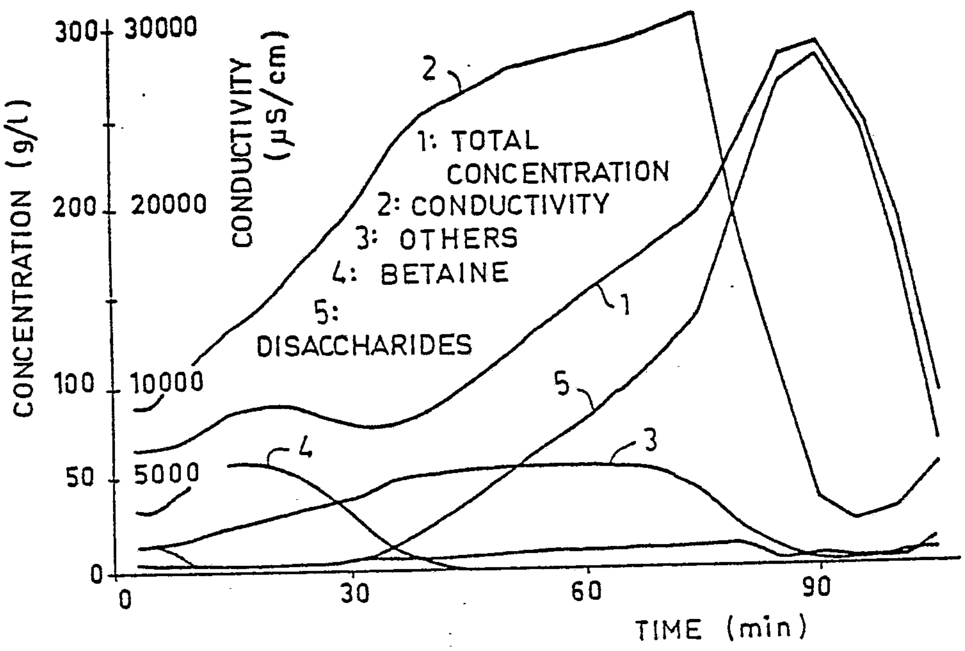


STEP II. BETAINE SEPARATION

FIG. 9

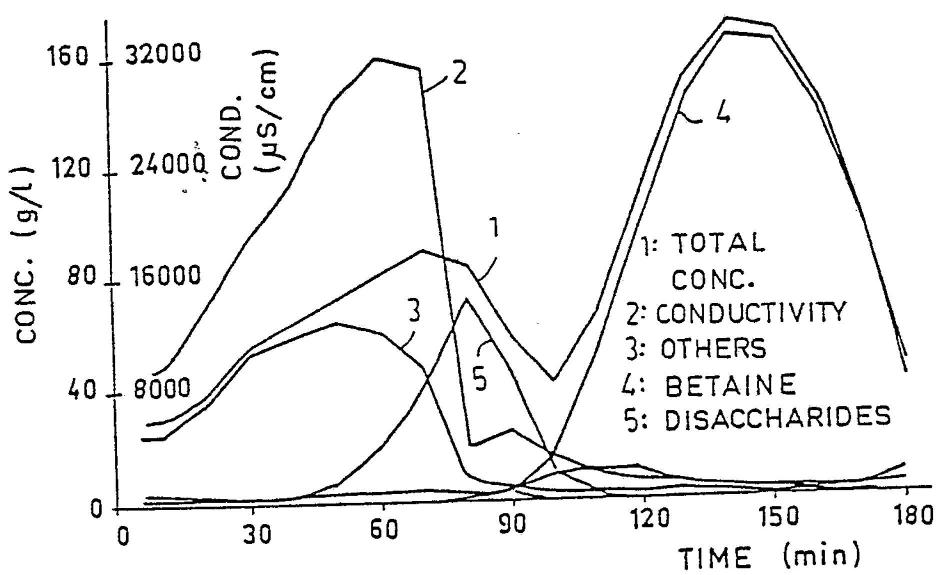

BETAINE PRODUCTION FROM INVERTED MOLASSES

FIG. 10

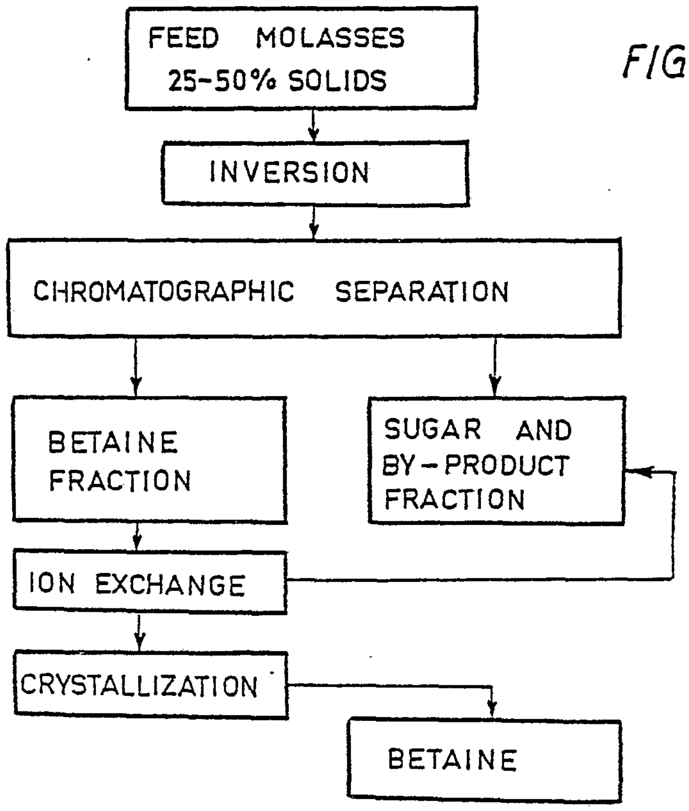


SEPARATION OF INVERTED
BEET MOLASSES

FIG. 11